# EUROPEAN PATENT APPLICATION

(11) **EP 4 679 809 A1**
(43) Date of publication of application: **14.01.2026**
(21) Application number: 24188080.6
(22) Date of filing: 11.07.2024
(51) Int. Cl.: H04N 1/60

(54) **A METHOD OF PRINTING A COLOR IMAGE OF AN IMAGE ONTO A SUBSTRATE**

(71) Applicant: Unilin, BV, 8710 Wielsbeke (BE); Interprint GmbH, 59759 Arnsberg (DE)
(72) Inventor: BOUTMANS, Beauregard, 8710 Wielsbeke (BE); CLEMENT, Benjamin, 8710 WIELSBEKE (BE); TADDAY, Malte, 59755 ARNSBERG (DE); DAVID, Robert, 59494 SOEST (DE)
(74) Representative: Unilin Technologies

(57) **Abstract**

A method of printing a color image of an image file onto a substrate (12) for decorative panels using a digital printer (10), the method comprising the following steps:
at a first point in time:
a) printing a plurality of color samples in a number of different colors on a substrate (12), said color samples comprising a reproduction of each color in a plurality of sample areas having the same color but different tonal values;
b) generating a first characteristic curve for each color by measuring the sample areas of each color and storing the first characteristic curves of each color in a primary file;

at a second point in time that is after the first point in time:
c) repeating step a) using the same colors and the same type of substrate;
d) generating a new characteristic curve for each color by measuring the sample areas of each color printed in step c) and storing the new characteristic curves of each color in a secondary file;
e) adapting the image file by means of the secondary file such that the colors are printed with the first characteristic curves of the primary file and printing the color image (18) of the adapted image file, or
e') adapting the printer's (10) settings by means of the secondary file such that the colors are printed with the first characteristic curves of the primary file and printing the color image (18) of the image file.

## Description

The present invention relate to a method of printing a color image of an image file onto a substrate for decorative panels such as floor panels, wall panels, sealing panels or furniture panels. In the manufacture of such panels, a sheet of material, e.g. a core paper of a panel or a foil, are digitally printed with a color image for producing various designs. The paper layers, paper sheets or foils are increasingly being printed digitally with ink jet technology. In order to achieve a satisfactory printing result when printing these substrates with inkjet technology, a maximum amount of ink that can be printed must first be defined and adapted to the substrate.

Inks are absorbed by substrates in different ways. The visual impression of a print is also influenced by the color of the substrate. In order to obtain a sufficiently accurate prediction of a single-color or multi-color print, sample areas that are made up of primary colors, secondary colors, tertiary colors and / or quaternary colors are first printed on the substrate. It is known for each color field how it is constructed from image data. These fields are then measured spectrophotometrically and converted by means software into a profile, in particular an ICC profile. The profile converts the data values of an image file into the strength of a printer's primary colors. For example, RGB data from the image file is converted into CMYK values of the printer or CMYK data from the image file is converted into C'M'Y'K' values of the printer.

Such profiles are not only available for inkjet printing but also for other output devices such as monitors or displays. With the help of the profiles of the output devices, it is then possible to display an image file on the output devices in such a way that it appears largely in the desired colors.

However, the difficulty arises that small changes of the output devices (displays, monitors, printers) or of the substrates can lead to significant color changes. A greater absorbency of a paper can lead to the ink penetrating deeper into the paper and thus appearing weaker in color. This is usually compensated for by altering the image file to correct the deviation. After correcting the image data, a new image file is output.

However, when correcting the image data, often several repetitions are necessary until a satisfactory result is achieved. This is associated with high costs. In addition, a new image file is created for each original image file, which is only valid at the time of creation. Alternatively, a new profile could be created, which is also only valid at the time of creation and very time consuming.

Therefore, it is the object of the invention to provide a method of printing a color image of an image file onto a substrate that is less time-consuming and ensures a color-accurate output without repetitive cycles.

The above object is solved by the features of claim 1.

According to the present invention at a first point in time a plurality of color samples is printed on a substrate in a number of different colors. The color samples comprise a reproduction of each color in a plurality of sample areas having the same color but different tonal values. For example, four different colors are printed on the substrate, wherein each color is printed in five different tonal values resulting in five sample areas for each color and in a total of twenty sample areas.

Thereafter, at the first point in time a first characteristic curve for each color is generated by measuring the sample areas of each color and the first characteristic curves of each color are stored in a primary file. Each first characteristic curve represents a curve that can be achieved with each new print. It can be defined for example as the density characteristic curve of a respective color. Other descriptions such as dot gain or L*a*b* are also possible. Characteristic curves can be generated using commercial color management software.

At the first point in time the color image of the image file can be printed onto the substrate wherein the colors of the printed image will correspond to the colors of the printed sample areas.

If a color image of the image file needs to be printed at a second point in time that is after the first point in time, the problem arises that small changes of the printer or of the substrate may lead to the different results as regards the colors. Therefore, at the second point in time again a plurality of color samples is printed in a number of different colors on a substrate wherein the same colors are used that were used at the first point in time. The color samples again comprise a reproduction of each color in a plurality of sample areas having the same color but different tonal values. The substrate used at the second point in time can be identical to the substrate used at the first point in time (that has for example been stored for a while). However, it can for example also be of the same type of substrate that was used at the first point in time but resulting from another production batch.

After the sample areas have been printed at the second point in time, a new characteristic curve for each color is generated by measuring these sample areas of each color and the new characteristic curves of each color are stored in a secondary file. This allows to either adapt the image file or the printer's settings by means of the data of the secondary file such that the colors are printed with the first characteristic curves of the primary file. Finally, the color image of the image file can be printed wherein the visual impression of the colors is identical to the print made at the first point in time.

Advantageous embodiments of the invention are defined in subclaims and the description.

The method and apparatus of the present invention are particularly suitable for the production of laminate panels that comprise a printed decorative layer. Such panels comprise a specific paper that needs to be impregnated with a resin after printing. Therefore, the paper is quite porous and absorbing so that a precise control of ink absorption and color consistency is essential. Papers that are particularly suitable to be used for the present invention may have a Gurley value below 40 seconds, in particular below 25 seconds, and in particular below 15 seconds. A primer on the paper may comprise polyvinyl alcohol and bivalent metal salt.

According to a first embodiment, the number of colors of the color samples is identical to the number of colors that can be printed with the printer. The number of colors can be at least three and in particular four or five. If color samples of three, four or five colors are printed with different tonal values, a good color fidelity can be achieved.

According to a further embodiment, color samples for each color can be printed with at least four or in particular five or more different tonal values.

According to a further embodiment, each sample area has a rectangular shape. Each sample area may cover at least sixteen dots and/or an area of about 4 mm² or more. With this embodiment, specific sample areas of a certain size are printed. An area of this size can be printed in high quality but can also be measured with high reliability.

According to a further embodiment, at the first point in time an image file can be printed and an image profile can be generated that is used to print the image file at the second point in time.

The image profile is for example an ICC profile. This profile will be fixed and will not be changed further. Each time an image file is output, it is used to calculate the output single color intensity.

According to a further embodiment, the new characteristic curves of the secondary file can be mapped onto the first characteristic curves of the primary file. By doing so, no further color corrections are necessary. By means of the mapping, the characteristic curves of the secondary file are adapted such as to correspond to the characteristic curves of the primary file. This allows to use the adapted characteristic curves of the secondary file to either adapt the image file or adapt the printer's settings to achieve a high color fidelity without further color corrections being required.

The method according to the invention can be repeated many times after the first point in time with the primary file remaining unchanged.

According to an embodiment, a first or all first characteristic curves can be linearized by programming the output device so that the characteristic becomes linear. In this way, the strength of the output of a tone value can be adjusted. With printers as output devices, the amount of ink applied can be adjusted. With monitors or displays the intensity of the RGB radiation can be adjusted.

According to a further embodiment the measuring of the sample areas is performed by means of a spectrophotometer or a densitometer.

The singular colors that are printed for different tonal values in the sample areas are measured and the result is a determined output characteristic curve. It represents a characteristic curve that can be achieved with each new output (print) on the output device. It can be defined as the density characteristic curve of the respective output color. Other descriptions of the characteristic curve, such as dot gain, are also possible.

If an image file is to be output again at a later point in time, a new characteristic curve is measured. All usual commercial software for measuring characteristic curves can be used. The data in the image file is then changed so that the original characteristic curve is reproduced by the printer. In this way, for example, a 12% tone yellow in the image file can become a 14% tone yellow in order to achieve the original characteristic curve for 12% yellow. Alternatively, the settings of the printer can be adjusted directly without changing the print file.

The conversions and adjustments can be done automatically using suitable commercial software. The new image file can be output but needs no longer to be saved. This allows to always achieve the desired output result with just one image file and one image profile in a single cycle. Since the new characteristic curve is mapped onto the original characteristic curve, no further color corrections are necessary.

A suitable output device is a digital printer, in particular an inkjet printer. The printer may have an unwinder and a rewinder and the ink may be dried by heat or radiation. The radiation can be IR, NIR, UV radiation, or electron beams.

The above method has been described in connection with the printing of a color image with a digital printer. However, the same method can be used to display a color image of an image file on a display, such as a monitor. This method corresponds to the method explained above with the difference that the image and the color samples are not printed but displayed. At the second point in time, the color samples can be displayed on the same type of display to achieve a high color fidelity.

According to a further aspect of the present invention a system for printing a color image of an image file onto a substrate for decorative panels is provided wherein the system comprises a controller, a printer and a measuring device adapted and configured to enable an execution of the method as described above.

An embodiment of the present invention is now described with reference to the drawing, wherein:

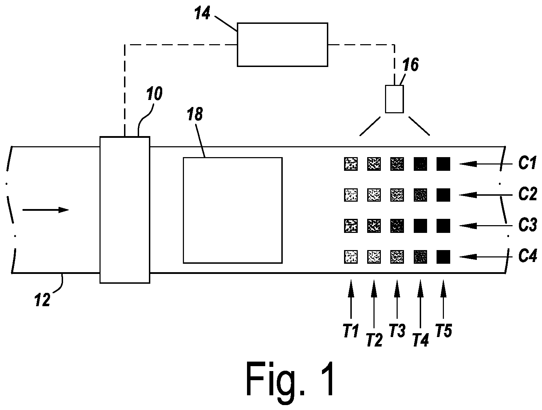

Fig. 1 shows a system for printing a color image onto a substrate.

The system shown in Fig. 1 comprises a digital printer 10 for printing a color image of an image file onto a substrate 12, such as a web or sheet of paper or plastic for decorative panels. The printer 10 is connected to a controller 14 that controls and adjusts the digital printer 10. Furthermore, a measuring device 16 such as a spectrophotometer or densitometer is provided, wherein the output of the measuring device 16 is connected to the controller. Alternatively, the measuring device 16 has a separate controller with a data connection to the controller 14.

With the above system it is possible to print a plurality of color samples in a number of different colors on the substrate 12. In the embodiment shown, four different colors C1, C2, C3 and C4 are printed on the substrate 12 in rectangular color samples wherein the color samples for each color C1 - C4 comprise a reproduction of the respective color in sample areas having the same color C1 - C4 but different tonal values T1 - T5. As an example, colors C1 - C4 could be chosen as C1 = yellow, C2 = yellow + red, C3 = brown and C4 = black. The tonal values T1 to T5 may for example vary between T1 = 10% and T5 = 100%.

After the color samples have been printed on the substrate 12 by means of the printer 10, all sample areas of these color samples are measured by means of the measuring device 16 and a first characteristic curve for each color C1 to C4 is generated and the first characteristic curves of each color are stored in a primary file in the controller 14.

At this point in time, it is also possible to print a color image 18 of the image file that needs to be printed.

At a second point in time that is after the first point in time the printing of the plurality of color samples is repeated in the same manner as described above wherein the same colors C1 - C4 and the same tonal values as before are printed. The sample areas can for example be printed on the identical substrate 12 as before or on a same type of substrate, such as the same substrate of a different batch.

Thereafter, the sample areas of each color printed at the second point in time are measured by means of the measuring device 16 and a new characteristic curve for each color is generated and the new characteristic curves for each color are stored in a secondary file in the controller 14.

To achieve a high color fidelity, either the image file in the controller 12 is adapted by means of the secondary file or the settings of the printer 10 are adapted by means of the secondary file such that the colors are printed with the first characteristic curves of the primary file. Thereafter, a color image of the adapted image file or of the original image file with adapted settings can be printed.

## Claims

1. A method of printing a color image of an image file onto a substrate (12) for decorative panels using a digital printer (10), the method comprising the following steps:
at a first point in time:
a) printing a plurality of color samples in a number of different colors on a substrate (12), said color samples comprising a reproduction of each color in a plurality of sample areas having the same color but different tonal values;
b) generating a first characteristic curve for each color by measuring the sample areas of each color and storing the first characteristic curves of each color in a primary file;
at a second point in time that is after the first point in time:
c) repeating step a) using the same colors and the same type of substrate;
d) generating a new characteristic curve for each color by measuring the sample areas of each color printed in step c) and storing the new characteristic curves of each color in a secondary file;
e) adapting the image file by means of the secondary file such that the colors are printed with the first characteristic curves of the primary file and printing the color image (18) of the adapted image file, or
e') adapting the printer's (10) settings by means of the secondary file such that the colors are printed with the first characteristic curves of the primary file and printing the color image (18) of the image file.

2. Method according to claim 1, wherein the substrate (12) is a core paper or a foil of a decorative panel, in particular of a floor panel, a wall panel, a sealing panel or a furniture panel.

3. Method according to claim 2, wherein the substrate (12) is a paper with a Gurley value below 40 seconds, in particular below 25 seconds and in particular below 15 seconds.

4. Method according to claim 1, 2 or 3, wherein the number of colors of the color samples is identical to the number of colors that can be printed with the printer, wherein the number of colors is in particular at least three and in particular four or five.

5. Method according to any one of the preceding claims, wherein each color is printed in steps a) and c) in at least four, in particular five or more, different tonal values.

6. Method according to any one of the preceding claims, wherein each sample area has a minimum size of 16 dots, in particular of about 4 mm².

7. Method according to any one of the preceding claims, wherein at the first point in time an image file is printed and an image profile, in particular an ICC profile, is generated that is used to print the image file at the second point in time.

8. Method according to claim 7, wherein the image profile that is used to print the image file at the second point in time is identical to the generated image profile.

9. Method according to any one of the preceding claims, wherein the new characteristic curves of the secondary file are mapped onto the first characteristic curves of the primary file.

10. Method according to any one of the preceding claims, wherein steps c) to e') are repeated at different points in time that are after the second point in time with the primary file remaining unchanged.

11. Method according to any one of the preceding claims, wherein at least one first characteristic curve is linearized after its generation.

12. Method according to any one of the preceding claims, wherein the measuring in step b) and/or d) is performed by means of a spectrophotometer or a densitometer.

13. Method according to any one of the preceding claims, wherein printer settings are adjusted to linearize the first characteristic curves generated in step b).

14. A system for printing a color image of an image file onto a substrate for decorative panels, comprising a controller, a printer and a measuring device, adapted and configured to enable an execution of the method of any one of the preceding claims.

15. A method of displaying a color image of an image file on a display, the method comprising the following steps:
at a first point in time:
a) displaying a plurality of color samples in a number of different colors on the display, said color samples comprising a reproduction of each color in a plurality of sample areas having the same color but different tonal values;
b) generating a first characteristic curve for each color by measuring the sample areas of each color and storing the first characteristic curves of each color in a primary file;
at a second point in time that is after the first point in time:
c) repeating step a) using the same colors and the same type of display;
d) generating a new characteristic curve for each color by measuring the sample areas of each color displayed in step c) and storing the new characteristic curves of each color in a secondary file;
e) adapting the image file by means of the secondary file such that the colors are displayed with the first characteristic curves of the primary file and displaying the color image of the adapted image file, or
e') adapting the display's settings such that the colors are displayed with the first characteristic curves of the primary file and displaying the color image of the image file.
